# EUROPÄISCHE PATENTSCHRIFT

(11) **EP 4 628 769 B1**
(45) Veröffentlichungstag und Bekanntmachung des Hinweises auf die Patenterteilung: **08.07.2026**
(21) Anmeldenummer: 25162797.2
(22) Anmeldetag: 11.03.2025
(51) Int. Cl.: F16K 31/528, F16K 31/60, F16K 35/02

(54) **BEDIENGRIFFVORRICHTUNG FÜR EIN THERMOSTATVENTIL UND WANDEINBAUVORRICHTUNG**
OPERATING HANDLE DEVICE FOR A THERMOSTATIC VALVE AND WALL MOUNTING DEVICE
DISPOSITIF DE POIGNÉE DE COMMANDE POUR UNE SOUPAPE THERMOSTATIQUE ET DISPOSITIF DE MONTAGE MURAL

(30) Priorität: 25.03.2024 DE 102024108388
(43) Veröffentlichungstag der Anmeldung: 08.10.2025
(73) Patentinhaber: Hansgrohe SE, 77761 Schiltach (DE)
(72) Erfinder: Balkau, Matthias, 77761 Schiltach (DE); Blattner, Joachim, 77716 Haslach (DE); de la Corte Moza, Julian, 77716 Haslach (DE); Obert, Wolfgang, 77790 Steinach (DE)
(74) Vertreter: Patentanwälte Ruff, Wilhelm, Beier, Dauster & Partner mbB

(56) Entgegenhaltungen:
- EP-A1- 2 485 111
- DE-A1- 102017 105 200
- DE-A1- 102018 110 333

## Beschreibung

Die Erfindung bezieht sich auf eine Bediengriffvorrichtung für ein Thermostatventil, wobei die Bediengriffvorrichtung einen Basiskörper und eine Griffeinheit aufweist, die am Basiskörper gehalten und gegenüber diesem zwischen einer Ruhestellung und einer ersten Bedienstellung axial verschiebbar und in der ersten Bedienstellung drehbeweglich ist. Des Weiteren bezieht sich die Erfindung auf eine sanitäre Wandeinbauvorrichtung mit einem wandeinbaubaren Aufnahmegehäuse, in dem die Bediengriffvorrichtung angeordnet ist.

Bediengriffvorrichtungen für Thermostatventile sind in verschiedenen Ausführungen bekannt und dienen dazu, dass ein Benutzer durch Betätigen der ihm zu diesem Zweck zugänglichen Griffeinheit das Thermostatventil bedienen kann, um eine oder mehrere veränderliche Ventilparameter des Thermostatventils einzustellen, wie insbesondere die Temperatur eines vom Thermostatventil abgegebenen Fluides bzw. das Mischungsverhältnis eines kälteren und eines wärmeren Fluides, die dem Thermostatventil getrennt zugeführt und vom Thermostatventil gemischt werden. In sanitären Anwendungen dient das Thermostatventil üblicherweise zur Bereitstellung von Mischwasser mit einer gewünschten Temperatur aus getrennt zugeführtem Kaltwasser und Warmwasser.

Bei Bediengriffvorrichtungen der vorliegend betrachteten und eingangs genannten Art ist die Griffeinheit am Basiskörper zwischen der Ruhestellung und der Bedienstellung axial verschiebbar angeordnet, wobei der Benutzer das Thermostatventil über die Drehbeweglichkeit der Griffeinheit in der Bedienstellung bedienen kann, d.h. den oder die betreffenden Ventilparameter einstellen kann.

Bei der Ruhestellung der Griffeinheit kann es sich insbesondere um eine Ausgangsstellung der Bediengriffvorrichtung für die Ansteuerung des Thermostatventils handeln, vorzugsweise um eine Stellung, in der die Griffeinheit für den Benutzer nicht zur Bedienbetätigung zugänglich ist, indem die Griffeinheit z.B. in einer Bedienoberfläche versenkt ist, und/oder in der die Griffeinheit, selbst wenn sie zugänglich ist, keine funktionsaktive Drehbewegung ausführen kann, d.h. keine den Ventilzustand des Thermostatventils beeinflussende Drehbewegung. Speziell kann die Griffeinheit in der Ruhestellung außenbündig zu einer korrespondierenden Bedienoberfläche und auf diese Weise für den Benutzer nicht zum Ausführen der Drehbewegung zugänglich angeordnet sein.

Bediengriffvorrichtungen des Typs, bei denen wie vorstehend erwähnt, die Griffeinheit in der Ruhestellung vorzugsweise außenbündig zu einer korrespondierenden Bedienoberfläche für den Benutzer nicht für die Drehbewegung zugänglich in der Bedienoberfläche versenkt angeordnet ist, sind beispielsweise bei Gargeräten, wie Backöfen, gebräuchlich, siehe die Offenlegungsschriften EP 2 835 711 A1, EP 3 647 462 A1 und EP 2 410 547 A1. Außerdem werden derartige Bediengriffvorrichtungen auch bei sanitären Anwendungen zur Nutzerbedienung von Thermostatventilen verwendet, siehe die Gebrauchsmusterschrift DE 20 2023 101 160 U1 und die Offenlegungsschrift WO 2010/038033 A2. Üblicherweise kann die Griffeinheit bei diesen Bediengriffvorrichtungen vom Benutzer durch axiales Drücken von der Ruhestellung in eine axial noch etwas weiter eingefahrene Position gebracht werden, aus der sie dann durch Federvorspannung selbsttätig axial in die Bedienstellung ausfährt, nachdem sie vom Benutzer losgelassen wurde, wobei sie in der Bedienstellung von der Bedienoberfläche für den Benutzer zur Ausübung der Bediendrehbewegung vorsteht. Eine weitere Bediengriffvorrichtung wird aus der DE 10 2018 110333 A1 bekannt.

Bei einem weiteren Typ von Bediengriffvorrichtungen der eingangs genannten Art dient die axiale Verschiebbarkeit der Griffeinheit zwischen der Ruhestellung und der Bedienstellung nicht lediglich dazu, die Griffeinheit zwischen einem inaktiven Zustand in der Ruhestellung und einem aktiven Bedienzustand in der Bedienstellung zu verlagern, sondern dazu, gleichzeitig eine zugeordnete Ventilsteuerungsfunktion auszuführen, beispielsweise eine Ein/Aus-Schaltfunktion für ein Thermostatventil. Eine Bedienvorrichtung dieser Art ist beispielsweise in der Offenlegungsschrift EP 3 499 103 A1 offenbart.

Der Erfindung liegt als technisches Problem die Bereitstellung einer Bediengriffvorrichtung der eingangs genannten Art, die gegenüber dem oben erwähnten Stand der Technik weitergehende Vorteile bietet, insbesondere im Hinblick auf Funktionalität, Designaspekte und/oder Herstellungsaufwand, sowie einer sanitären Wandeinbauvorrichtung mit einer solchen Bediengriffvorrichtung zugrunde.

Die Erfindung löst dieses Problem durch die Bereitstellung einer Bediengriffvorrichtung mit den Merkmalen des Anspruchs 1 und einer sanitären Wandeinbauvorrichtung mit den Merkmalen des Anspruchs 9. Vorteilhafte Weiterbildungen der Erfindung sind in den Unteransprüchen angegeben, deren Wortlaut hiermit durch Verweis zum Bestandteil der Beschreibung gemacht wird. Dies schließt insbesondere auch alle Ausführungsformen der Erfindung ein, die sich aus den Merkmalskombinationen ergeben, die durch die Rückbezüge in den Unteransprüchen definiert sind.

Die erfindungsgemäße Bediengriffvorrichtung weist eine zweite Bedienstellung, in welche die Griffeinheit ausgehend von der ersten Bedienstellung axial verschiebbar ist und in welcher die Griffeinheit drehbeweglich ist, und eine Bewegungsführung auf, welche das axiale Verschieben der Griffeinheit von der ersten Bedienstellung in die zweite Bedienstellung nur freigibt, wenn sich die Griffeinheit in einer vorgegebenen Freigabedrehstellung befindet, und welche die Griffeinheit gegen Verdrehen sperrt, wenn sich diese axial zwischen der ersten Bedienstellung und der zweiten Bedienstellung befindet.

Erfindungsgemäß ist somit für die Griffeinheit durch die zweite Bedienstellung eine weitere, zweite Bedienebene gebildet, in welcher die Griffeinheit drehbeweglich ist und damit für eine entsprechende Verstellbetätigung des Thermostatventils genutzt werden kann, zusätzlich zu der durch die erste Bedienstellung bereitgestellten ersten Bedienebene. Dadurch lässt sich die Funktionalität der Bediengriffvorrichtung je nach Bedarf erweitern.

Besonders vorteilhaft kann die erfindungsgemäße Bediengriffvorrichtung aufgrund dieser Eigenschaft dazu genutzt werden, mit vergleichsweise geringem Herstellungsaufwand und/oder in einer hinsichtlich Designaspekten günstigen Weise eine an sich bekannte Verbrühschutzfunktion für das Thermostatventil bereitzustellen. Bei herkömmlichen Thermostatventilen wird diese Verbrühschutzfunktion typischerweise dadurch realisiert, dass für die Drehbewegung einer entsprechend konfigurierten Griffeinheit ein Endanschlag vorgesehen ist, der einer zwecks Verbrühschutz vorgegebenen Maximaltemperatur entspricht und durch Drücken eines an der Griffeinheit angeordneten Entsperrknopfs überfahren werden kann. Dies bedingt jedoch das zusätzliche Bereitstellen eines solchen Entsperrmechanismus, und der Entsperrknopf, der für den Benutzer zugänglich sein muss und sich typischerweise am Außenumfang eines hülsenförmigen Bediengriffteils befindet, beschränkt die Designflexibilität für die Ausführung der Griffeinheit. Bei der erfindungsgemäßen Bediengriffvorrichtung kann hingegen ein solcher Verbrühschutz und dessen Überwindung vorteilhaft dadurch realisiert sein, dass die eine der beiden Bedienstellungen, z.B. die erste Bedienstellung, der Ventileinstellung im Temperaturbereich unterhalb der für den Verbrühschutz vorgegebenen Maximaltemperatur dient, während die andere, z.B. die zweite, Bedienstellung der Ventileinstellung im Temperaturbereich oberhalb dieser Maximaltemperatur dient.

Da die Bewegungsführung das axiale Verschieben der Griffeinheit von der ersten in die zweite Bedienstellung nur freigibt, wenn sich die Griffeinheit in der dazu vorgegebenen Freigabedrehstellung befindet, wird vermieden, dass die Griffeinheit beim Bedienen, d.h. Verdrehen, in der ersten Bedienstellung versehentlich in die zweite Bedienstellung gelangt. Ebenso verhindert die Bewegungsführung, indem sie die Griffeinheit gegen Verdrehen sperrt, wenn sich diese axial zwischen der ersten und zweiten Bedienstellung befindet, dass sich die Griffeinheit unbeabsichtigt verdreht und dadurch eventuell eine nicht gewünschte Ventilfunktion bewirkt, wenn die Griffeinheit von der ersten in die zweite Bedienstellung oder umgekehrt von der zweiten in die erste Bedienstellung bewegt wird. Somit separiert die Bewegungsführung funktionssicher die Axialbewegung der Griffeinheit von der ersten in die zweite Bedienstellung sowie von der zweiten in die erste Bedienstellung von der jeweiligen Drehbewegung der Griffeinheit in der ersten bzw. in der zweiten Bedienstellung. Die Bewegungsführung ist hierbei vergleichsweise einfach realisierbar und lässt sich insbesondere ohne den herkömmlichen, designbeschränkenden Entsperrknopf bereitstellen.

Zur Ankopplung des durch den Benutzer mit Hilfe der erfindungsgemäßen Bediengriffvorrichtung zu betätigenden bzw. zu steuernden Thermostatventils wird in an sich herkömmlicher Weise ein Anschluss- bzw. Koppelglied des Thermostatventils drehfest und axialbeweglich an die Griffeinheit angekoppelt. wonach der Benutzer durch Drehen der Griffeinheit in der ersten bzw. zweiten Bedienstellung die zugedachte Ventileinstellfunktion ausführen kann. Bei dem Anschluss- bzw. Koppelglied kann es sich beispielsweise um einen hierfür dienenden Anschlussstummel einer Steuerwelle des Thermostatventils handeln, mit der von einer als Ventilgehäuse fungierenden Ventilkartusche vorsteht. Der Basiskörper der Bediengriffvorrichtung kann z.B. mit der Ventilkartusche oder einer anderen stationären Komponente des Thermostatventils verbunden bzw. an dieser fixiert werden. Alternativ kann der Basiskörper der Bediengriffvorrichtung an einem anderen Bauteil angebracht werden, das seinerseits mit einer stationären Komponente des Thermostatventils, wie einer Ventilkartusche desselben, verbunden ist.

Die jeweilige Drehbeweglichkeit der Griffeinheit in der ersten und der zweiten Bedienstellung, wie sie bei der erfindungsgemäßen Bediengriffvorrichtung gegeben ist, kann bei Bedarf auch zur Einstellung unterschiedlicher Ventilparameter des Thermostatventils genutzt werden, wie für eine Ein/Aus-Schaltfunktion einerseits und eine Fluidmischfunktion bzw. Fluidtemperatureinstellfunktion andererseits.

In einer Weiterbildung der Erfindung ist die Griffeinheit in der ersten Bedienstellung zwischen einer ersten und einer zweiten Drehendstellung begrenzt drehbeweglich, wobei die zweite Drehendstellung die Freigabedrehstellung ist. In dieser Ausführung ermöglicht die Bediengriffvorrichtung somit eine beidseitig begrenzte Einstellung eines zugeordneten Ventilparameters mit der Griffeinheit in der ersten Bedienstellung, und die Griffeinheit lässt sich in die zweite Bedienstellung axial verlagern, wenn sie sich in der betreffenden Drehendstellung der ersten Bedienstellung befindet.

Diese Ausführung ist somit wiederum besonders vorteilhaft für die Bereitstellung der erwähnten Verbrühschutzfunktion geeignet. Die normale Temperaturverstellung bis zur Maximaltemperatur des Verbrühschutzes erfolgt mit der Griffeinheit in der ersten Bedienstellung, wobei die Maximaltemperatur durch die zweite Drehendstellung definiert ist, und durch axiales Verlagern der Griffeinheit in die zweite Bedienstellung lässt sich der Verbrühschutz in einfacher Weise überwinden, wonach die Temperatureinstellung für den entsprechenden erhöhten Temperaturbereich mit der Griffeinheit durch Verdrehen in der zweiten Bedienstellung bewirkt wird.

In alternativen Ausführungen ist die Griffeinheit in der ersten Bedienstellung ohne Drehwinkelbegrenzung frei drehbeweglich. Als Freigabedrehstellung für das axiale Verschieben der Griffeinheit von der ersten in die zweite Bedienstellung kann in diesem Fall eine beliebige, vorgebbare Drehstellung der Griffeinheit in der ersten Bedienstellung fungieren.

In einer Ausgestaltung der Erfindung ist die Griffeinheit in der zweiten Bedienstellung von der Freigabedrehstellung aus in Richtung eines Drehsinns von der ersten zur zweiten Drehendstellung der ersten Bedienstellung weiterdrehbar. Diese Maßnahme begünstigt eine intuitive Bedienung der Griffeinheit, indem die Griffeinheit, nachdem sie in der ersten Bedienstellung zur zweiten Drehendstellung und damit zur Freigabedrehstellung gedreht wurde, nach axialem Verbringen in die zweite Bedienstellung im gleichen Drehsinn in der zweiten Bedienstellung weitergedreht werden kann. Dies entspricht insoweit dem Weiterdrehen der Griffeinheit beim erwähnten herkömmlichen Thermostatventil mit Verbrühschutz nach Betätigen des Entsperrknopfs. In alternativen Ausführungen ist die Griffeinheit bzw. die Bewegungsführung derart konfiguriert, dass die Griffeinheit in der zweiten Bedienstellung von der Freigabedrehstellung aus in umgekehrtem Drehsinn verdrehbar ist, d.h. entgegen dem Drehsinn von der ersten zur zweiten Drehendstellung, wenn sich dies für entsprechende Anwendungen als zweckmäßig erweist.

In einer Weiterbildung der Erfindung befindet sich die erste Bedienstellung axial zwischen der Ruhestellung und der zweiten Bedienstellung. Dies stellt eine für viele Anwendungen optimale Abfolge dieser drei unterschiedlichen Axialstellungen der Griffeinheit dar. Das axiale Verlagern der Griffeinheit von der ersten in die zweite Bedienstellung erfolgt in diesem Fall in der gleichen axialen Vorwärts- oder Rückwärtsrichtung wie das axiale Verlagern von der Ruhestellung in die erste Bedienstellung. In alternativen Ausführungen befindet sich die Ruhestellung axial zwischen der ersten und zweiten Bedienstellung, oder die zweite Bedienstellung befindet sich axial zwischen der Ruhestellung und der ersten Bedienstellung, wenn dies für entsprechende Anwendungen zweckmäßig ist.

In einer Weiterbildung der Erfindung weist die Griffeinheit einen Griffkörper und einen Zwischenkörper auf. Der Griffkörper ist mit dem Zwischenkörper drehgekoppelt und durch eine erste Kulissenführung am Zwischenkörper zwischen einer mit der Ruhestellung der Griffeinheit korrespondierenden Griffruhestellung und einer mit der ersten und zweiten Bedienstellung der Griffeinheit korrespondierenden Griffbedienstellung axialbeweglich geführt. Der Zwischenkörper ist durch eine zweite Kulissenführung am Basiskörper in der ersten und der zweiten Bedienstellung drehbeweglich geführt und in der Freigabedrehstellung axialbeweglich zwischen der ersten Bedienstellung und der zweiten Bedienstellung geführt.

Dies stellt eine in konstruktiver und funktioneller Hinsicht vorteilhafte, mehrteilige Ausführung der Griffeinheit dar, wobei diese Konfiguration die der Griffeinheit zugedachte Bewegungskinematik im Hinblick auf deren Drehbeweglichkeit in der ersten und zweiten Bedienstellung sowie deren axialer Verschiebbarkeit zwischen der Ruhestellung und der ersten und zweiten Bedienstellung in einer optimalen Weise zu erfüllen vermag. Durch die erste Kulissenführung lässt sich der Griffkörper und damit die Griffeinheit axial zwischen der Ruhestellung einerseits sowie der ersten und zweiten Bedienstellung andererseits gegenüber dem Zwischenkörper verlagern. Durch die zweite Kulissenführung lässt sich der Zwischenkörper und damit die Griffeinheit, wenn sich diese in der Freigabedrehstellung befindet, axial zwischen der ersten und der zweiten Bedienstellung gegenüber dem Basiskörper verlagern. Zudem sorgt die erste Kulissenführung durch die Drehkopplung dafür, dass sich der Zwischenkörper mit dem Griffkörper mitdreht, wenn der Griffkörper vom Benutzer zur Ausführung der Drehbewegung der Griffeinheit gedreht wird. Gleichzeitig ermöglicht die zweite Kulissenführung die Drehbeweglichkeit des Zwischenkörpers gegenüber dem Basiskörper. Die erste und die zweite Kulissenführung stellen somit vorteilhafte Ausprägungen der Bewegungsführung der Bediengriffvorrichtung dar.

Das oben erwähnte Anschluss- bzw. Koppelglied des Thermostatventils wird in diesem Fall z.B. an den Zwischenkörper drehfest und axialbeweglich angekoppelt, wonach der Benutzer durch Drehen des Griffkörpers in der ersten bzw. zweiten Bedienstellung der Griffeinheit die zugedachte Ventileinstellfunktion ausführen kann. Dabei überträgt sich die Drehung des Griffkörpers auf eine entsprechende Drehung des drehfest gekoppelten Zwischenkörpers und damit des mit diesem drehfest gekoppelten Anschluss- bzw. Koppelglieds des Thermostatventils.

In alternativen Ausführungen kann die Griffeinheit einteilig ausgeführt und in geeigneter Weise durch eine oder mehrere Kulissenführungen bzw. durch die Bewegungsführung in der geforderten Weise axialbeweglich und drehbeweglich am Basiskörper der Bediengriffvorrichtung angeordnet bzw. gehalten sein.

In einer Ausgestaltung der Erfindung weisen der Griffkörper und der Zwischenkörper teleskopartig ineinandergreifende Hülsenteile auf. Die erste Kulissenführung beinhaltet eine Kulissennut am Hülsenteil des Zwischenkörpers und einen in der Kulissennut geführten Kulissennocken am Hülsenteil des Griffkörpers. Dies stellt eine vorteilhaft einfache Realisierung für den Griffkörper, den Zwischenkörper und die erste Kulissenführung zur Erfüllung der von diesen geforderten Funktionen dar. Die Kulissennut der ersten Kulissenführung kann z.B. eine Kurvenbahn mit herzförmigem Kurvenverlauf bilden. Es versteht sich, dass die erste Kulissenführung bei Bedarf eine oder mehrere weitere Kulissennuten und zugehörige Kulissennocken aufweisen kann, vorzugsweise am Hülsenumfang des betreffenden Hülsenteils verteilt, was die Stabilität der dadurch geführten Bewegung des Griffkörpers gegenüber dem Zwischenkörper erhöhen kann. Alternativ können der Griffkörper und der Zwischenkörper in einer anderen Konfiguration realisiert sein, die zur Erfüllung der geforderten Funktionalität geeignet ist, wie es sich für den Fachmann versteht.

In einer Ausgestaltung der Erfindung weist der Basiskörper einen den Zwischenkörper umgebenden Hülsenabschnitt auf, und die zweite Kulissenführung beinhaltet eine Kulissennut am Hülsenabschnitt des Basiskörpers und einen in dieser geführten, vom Zwischenkörper radial abstehenden Kulissennocken. Auch diese Ausführung bietet konstruktive Vorteile und ermöglicht eine funktionssichere Erfüllung der geforderten Bewegungsvorgänge des Zwischenkörpers sowie der Führungsfunktion der zweiten Kulissenführung. Es versteht sich auch hier, dass die zweite Kulissenführung bei Bedarf eine oder mehrere weitere Kulissennuten und zugehörige Kulissennocken aufweisen kann, um die Stabilität der dadurch geführten Bewegung zu erhöhen, vorzugsweise wiederum in einer in Umfangsrichtung verteilten Anordnung. Alternativ ist eine andere Konfiguration für den Basiskörper und den Zwischenkörper verwendbar, welche die geforderten Funktionen erfüllt, beispielsweise eine Konfiguration, bei welcher der Zwischenkörper einen den Basiskörper umgebenden Hülsenabschnitt aufweist und die zweite Kulissenführung dazu passend in ähnlicher Weise wie oben angegeben realisiert ist.

In einer Weiterbildung der Erfindung ist der Griffkörper gegenüber dem Zwischenkörper durch eine Griffkörper-Vorspannfeder axial von seiner Griffruhestellung in Richtung seiner Griffbedienstellung vorgespannt. Dies ermöglicht es dem Griffkörper, selbsttätig axial in seine Griffbedienstellung zu gelangen, nachdem er durch den Benutzer aus seiner Griffruhestellung herausgebracht worden ist. In alternativen Ausführungen fehlt diese Vorspannfeder oder ist durch eine entgegengesetzt wirkende Vorspannfeder ersetzt. In diesen Fällen bewegt der Benutzer den Griffkörper aktiv, d.h. mit Kraftaufwand, axial in die Griffbedienstellung.

In einer Weiterbildung der Erfindung ist der Zwischenkörper gegenüber dem Basiskörper durch eine Zwischenkörper-Vorspannfeder axial von der zweiten Bedienstellung in Richtung der ersten Bedienstellung vorgespannt. Diese Maßnahme ermöglicht es dem Zwischenkörper, sich selbsttätig axial von der zweiten in die erste Bedienstellung zu bewegen, wenn diese Bewegung freigegeben ist, indem sich die Griffeinheit in der Freigabedrehstellung befindet. Das axiale Verschieben des Zwischenkörpers von der ersten in die zweite Bedienstellung der Griffeinheit erfolgt in diesem Fall vom Benutzer aktiv, d.h. mit Kraftaufwand, unter Überwindung der Vorspannkraft der Zwischenkörper-Vorspannfeder. In alternativen Ausführungen fehlt die Zwischenkörper-Vorspannfeder oder ist durch eine Vorspannfeder mit entgegengesetzter Vorspannwirkung ersetzt, wobei dann der Zwischenkörper vom Benutzer über den Griffkörper aktiv unter Kraftaufwand axial von der zweiten in die erste Bedienstellung verbracht wird.

In vorteilhaften Realisierungen stützt sich die Zwischenkörper-Vorspannfeder über eine Gleitfläche am Zwischenkörper ab, so dass der Zwischenkörper, wenn er sich bei Bediendrehbewegungen der Griffeinheit in der ersten oder zweiten Bedienstellung dreht, keine signifikanten rotatorischen Kräfte auf diese Vorspannfeder an ihrer Abstützstelle am Zwischenkörper überträgt, was für die Zwischenkörper-Vorspannfeder unerwünschte Torsionsbelastungen vermeidet. Die Gleitfläche kann beispielsweise durch ein scheibenringförmiges Gleitelement bereitgestellt werden, über das sich die Zwischenkörper-Vorspannfeder gegen den Zwischenkörper abstützt und das vorzugsweise drehfest, jedoch axialbeweglich am Basiskörper gehalten ist. Dazu kann das Gleitelement beispielsweise über eine zugehörige Kulissenführung mit einem oder mehreren Kulissennocken am Gleitelement und einem oder mehreren korrespondierenden Kulissennuten am Basiskörper geführt sein.

Die erfindungsgemäße sanitäre Wandeinbauvorrichtung beinhaltet ein wandeinbaubares Aufnahmegehäuse mit einer vorderseitigen Gehäuseabdeckung und die erfindungsgemäße Bediengriffvorrichtung, die im Aufnahmegehäuse angeordnet ist und zur Betätigung einer Einstelleinheit eines Thermostatventils dient. Die Griffeinheit erstreckt sich durch eine Öffnung der Gehäuseabdeckung hindurch. Die axiale Bewegungsrichtung der Griffeinheit verläuft senkrecht zur Ebene der Gehäuseabdeckung. Dabei muss das Aufnahmegehäuse rückseitig und vorderseitig nicht zwingend vollständig geschlossen bzw. abgedichtet sein. So kann das Aufnahmegehäuse z.B. eine Art rahmenförmiger Wandmontageträger mit zumindest teilweise offener Rückseite sein. **In** entsprechenden Ausführungen deckt die Gehäuseabdeckung nur einen Teil der Vorderseite des Aufnahmegehäuses ab, in dem sich die Griffeinheit befindet.

Dies stellt eine funktionell und hinsichtlich Designaspekten vorteilhafte Verwendung der erfindungsgemäßen Bediengriffvorrichtung als Bestandteil einer sanitären Wandeinbauvorrichtung dar. Der Benutzer kann die Griffeinheit der Bediengriffvorrichtung über die Öffnung der Gehäuseabdeckung des wandeinbaubaren Aufnahmegehäuses der Wandeinbauvorrichtung handhaben. Durch den senkrechten Verlauf der axialen Bewegungsrichtung der Griffeinheit zur Ebene der Gehäuseabdeckung nimmt die Griffeinheit in der Ruhestellung sowie der ersten und der zweiten Bedienstellung jeweils unterschiedliche Axialpositionen relativ zur Gehäuseabdeckung ein.

In einer Weiterbildung der Erfindung ist die Griffeinheit in der Ruhestellung im Wesentlichen fluchtend zur Gehäuseabdeckung angeordnet, d.h. eine Stirnseite der Griffeinheit fluchtet mit einer umgebenden Oberfläche der Gehäuseabdeckung. Wenn sich die Griffeinheit in ihrer ersten oder in ihrer zweiten Bedienstellung befindet, steht sie jeweils von der Gehäuseabdeckung vor. Dies stellt eine vorteilhafte Realisierung für die relative axiale Lage der Griffeinheit in Bezug zur Gehäuseabdeckung dar. In der Ruhestellung fluchtet die Griffeinheit außenseitig zur Gehäuseabdeckung, was unter Designaspekten erwünscht sein kann. In den beiden Bedienstellungen steht die Griffeinheit axial gegenüber der Gehäuseabdeckung vor und kann dadurch bediensicher vom Benutzer gegriffen und zum Bewirken der jeweiligen Drehbewegung gedreht werden.

Vorteilhafte Ausführungsformen der Erfindung sind in den Zeichnungen dargestellt. Diese und weitere Ausführungsformen der Erfindung werden nachfolgend näher erläutert. Dabei zeigen:
- Fig. 1: eine Perspektivansicht einer Bediengriffvorrichtung mit einem Basiskörper und einer Griffeinheit in einer Ruhestellung für ein Thermostatventil,
- Fig. 2: eine Seitenansicht der Bediengriffvorrichtung,
- Fig. 3: die Seitenansicht von Fig. 2 mit der Griffeinheit in einer ersten Bedienstellung,
- Fig. 4: die Seitenansicht von Fig. 2 mit der Griffeinheit in einer zweiten Bedienstellung,
- Fig. 5: eine Längsschnittansicht der Bediengriffvorrichtung in einer ersten Längsebene mit der Griffeinheit in der Ruhestellung,
- Fig. 6: eine Längsschnittansicht der Bediengriffvorrichtung in einer zur ersten senkrechten zweiten Längsebene,
- Fig. 7: die Längsschnittansicht von Fig. 5 mit der Griffeinheit in der ersten Bedienstellung,
- Fig. 8: die Längsschnittansicht von Fig. 5 mit der Griffeinheit in der zweiten Bedienstellung,
- Fig. 9: eine Innenseitenansicht einer Halbschale einer zweischaligen Ausführung des Basiskörpers,
- Fig. 10: eine Seitenansicht eines Zwischenkörpers der Griffeinheit und
- Fig. 11: eine Perspektivansicht einer sanitäre Wandeinbauvorrichtung mit einer Bediengriffvorrichtung gemäß den Figuren 1 bis 10.

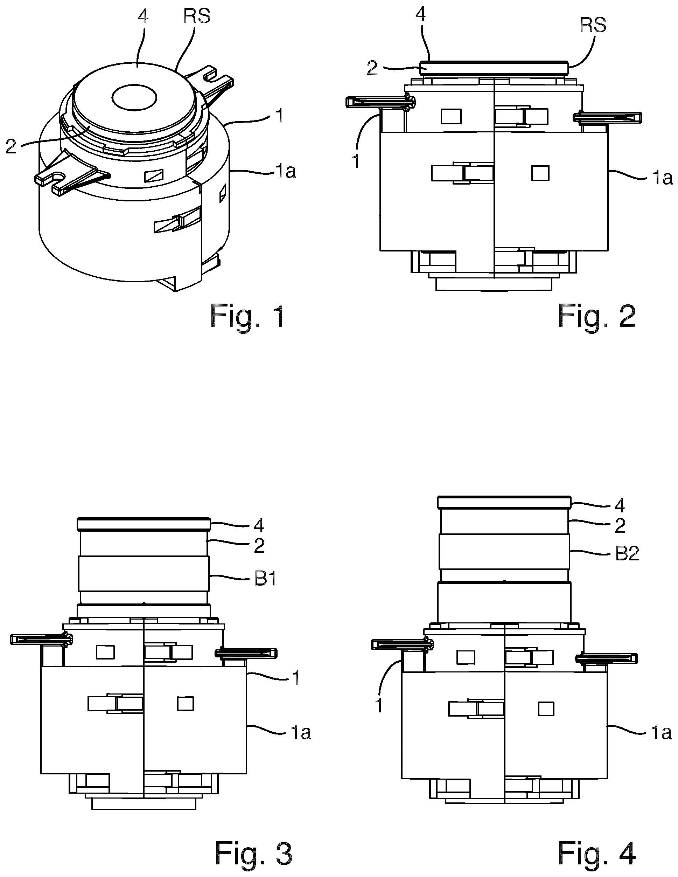

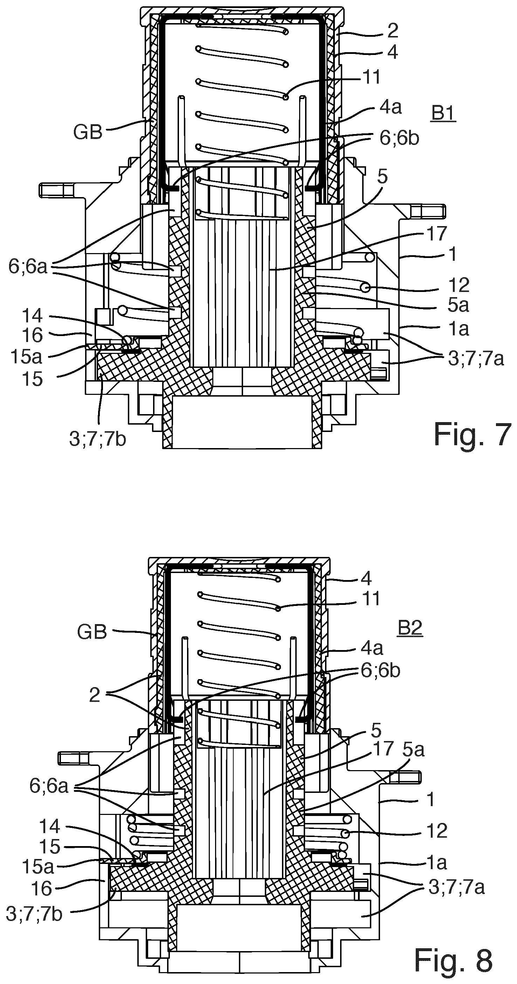

Wie in den Figuren anhand einer exemplarischen Ausführung veranschaulicht, umfasst die erfindungsgemäße Bediengriffvorrichtung einen Basiskörper 1 und eine Griffeinheit 2, die am Basiskörper 1 gehalten und gegenüber diesem zwischen einer Ruhestellung RS, siehe die Fig. 1, 2, 5 und 6, und einer ersten Bedienstellung B1, siehe die Fig. 3 und 7, axial verschiebbar und in der ersten Bedienstellung B1 drehbeweglich ist. Ausgehend von der ersten Bedienstellung B1 ist die Griffeinheit 2 axial in eine zweite Bedienstellung B2 verschiebbar, siehe die Fig. 4 und 8, wobei die Griffeinheit 2 auch in der zweiten Bedienstellung B2 drehbeweglich ist. Eine Bewegungsführung 3 gibt das axiale Verschieben der Griffeinheit 2 von der ersten Bedienstellung B1 in die zweite Bedienstellung B2 nur frei, wenn sich die Griffeinheit 2 in einer vorgegebenen Freigabedrehstellung DF befindet. Die Bewegungsführung 3 sperrt die Griffeinheit 2 gegen Verdrehen, wenn sich die Griffeinheit 2 axial zwischen der ersten Bedienstellung B1 und der zweiten Bedienstellung B2 befindet.

Somit lässt sich die Griffeinheit 2 zwischen den beiden Bedienstellungen B1, B2 axial verschieben, ohne sich dabei versehentlich zu verdrehen und dadurch eine unbeabsichtigte Ventilverstellung zu bewirken, und in jeder der beiden Bedienstellungen B1, B2 lässt sich die Griffeinheit 2 drehen, was für eine entsprechende Ventilbedienfunktion bzw. Ventilverstellfunktion eines mit der Bediengriffvorrichtung zu koppelnden Thermostatventils genutzt werden kann. Dabei kann die Griffeinheit 2 von ihrer Ruhestellung RS durch axiales Verschieben in ihre erste Bedienstellung B1 verbracht werden. Bei der Ruhestellung RS kann es sich z.B. um eine reine Aufbewahrungsstellung handeln, in der die Griffeinheit 2 keine ventilbeeinflussende Drehbewegung ausführen kann. Je nach Bedarf und Anwendungsfall kann das axiale Verschieben der Griffeinheit 2 von der Ruhestellung RS in die erste Bedienstellung B1 oder umgekehrt von der ersten Bedienstellung B1 in die Ruhestellung RS zusätzlich dazu konfiguriert sein, eine zugeordnete Ventileinstellfunktion zu erfüllen.

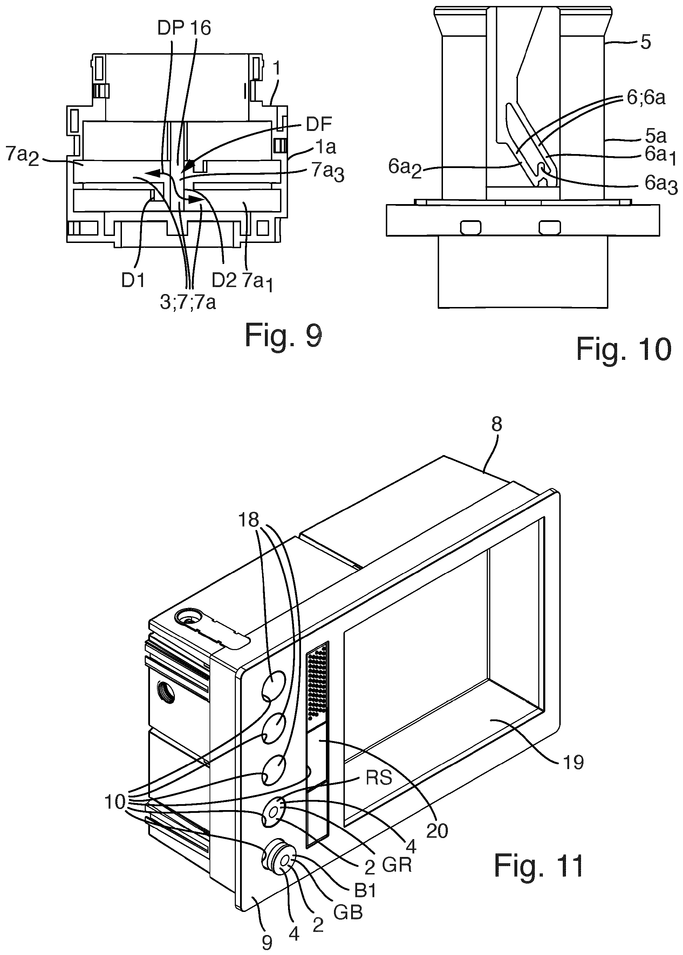

In vorteilhaften Ausführungsformen ist die Griffeinheit 2, wie im gezeigten Beispiel, in der ersten Bedienstellung B1 zwischen einer ersten Drehendstellung D1 und einer zweiten Drehendstellung D2, in Fig. 9 durch entsprechende Endbereiche bzw. Endanschläge der Bewegungsführung 3 gezeigt, begrenzt drehbeweglich, wobei die zweite Drehendstellung D2 die Freigabedrehstellung DF darstellt. Mit anderen Worten kann die Griffeinheit 2 in diesem Fall über einen begrenzten Drehwinkelbereich hinweg gedreht werden. Im Fall eines Thermostatventils mit Verbrühschutzfunktion kann dies beispielsweise zur Temperatureinstellung für das Thermostatventil zwischen einer Minimaltemperatur, typischerweise der Temperatur eines zugeführten kalten Fluids, und einer Verbrühschutz-Maximaltemperatur genutzt werden, die unterhalb der maximal möglichen Temperatur liegt, wobei letztere typischerweise durch die Temperatur eines zugeführten heißen Fluids gegeben ist. In der zweiten Drehendstellung D2 kann die Griffeinheit 2 bei Bedarf axial von ihrer ersten Bedienstellung B1 in ihre zweite Bedienstellung B2 verlagert werden, und der Benutzer kann die Griffeinheit 2 anschließend in der durch die zweite Bedienstellung B2 gegebenen, zweiten Bedienebene verdrehen, die axial von der durch die erste Bedienstellung B1 repräsentierten ersten Bedienebene beabstandet ist. Im Fall des Thermostatventils mit Verbrühschutzfunktion kann die Drehbeweglichkeit der Griffeinheit 2 in der zweiten Bedienstellung B2 dazu genutzt werden, die Temperatur für das vom Thermostatventil abgegebene Fluid auf einen gewünschten Wert zwischen der Verbrühschutz-Maximaltemperatur und der durch das heiße Fluid gegebenen, maximal möglichen Temperatur einzustellen.

In entsprechenden Realisierungen ist die Griffeinheit 2, wie im gezeigten Beispiel, in der zweiten Bedienstellung B2 von der Freigabedrehstellung DF aus in Richtung des Drehsinns von der ersten Drehendstellung D1 zur zweiten Drehendstellung D2 der ersten Bedienstellung B1 weiterdrehbar. Die Wirkrichtung der Drehbewegung der Griffeinheit 2 in der zweiten Bedienstellung B2 auf den davon beeinflussten Ventilparameter kann durch diese Maßnahme der Wirkrichtung der Drehbewegung der Griffeinheit 2 in der ersten Bedienstellung B1 auf die Einstellung des dieser Drehbewegung zugeordneten Ventilparameters entsprechen, wobei es sich bei dem durch die Drehbewegung der Griffeinheit 2 in der ersten Bedienstellung B1 beeinflussten Ventilparameter um den gleichen oder einen anderen Ventilparameter handeln kann, der durch die Drehbewegung der Griffeinheit 2 in der zweiten Bedienstellung B2 eingestellt wird. In alternativen Ausführungen kann vorgesehen sein, dass die Griffeinheit 2 in der zweiten Bedienstellung B2 von der Freigabedrehstellung DF aus im zur ersten Bedienstellung B1 umgekehrten Drehsinn gedreht werden kann, quasi als Rückwärtsdrehung der Vorwärtsdrehung in der ersten Bedienstellung B1 in Richtung der zweiten Drehendstellung D2.

In entsprechenden Ausführungsformen befindet sich die erste Bedienstellung B1, wie im gezeigten Beispiel, axial zwischen der Ruhestellung RS und der zweiten Bedienstellung B2. Speziell kann es sich, wie im gezeigten Beispiel, bei der Ruhestellung RS um eine am weitesten in Richtung Basiskörper 1 axial eingefahrene bzw. eingedrückte Position und bei der zweiten Bedienstellung B2 um eine am weitesten in Bezug auf den Basiskörper 1 ausgefahrene bzw. vorstehende Stellung der Griffeinheit 2 handeln. Dies verdeutlicht eine vergleichende Betrachtung der Fig. 2 bis 4.

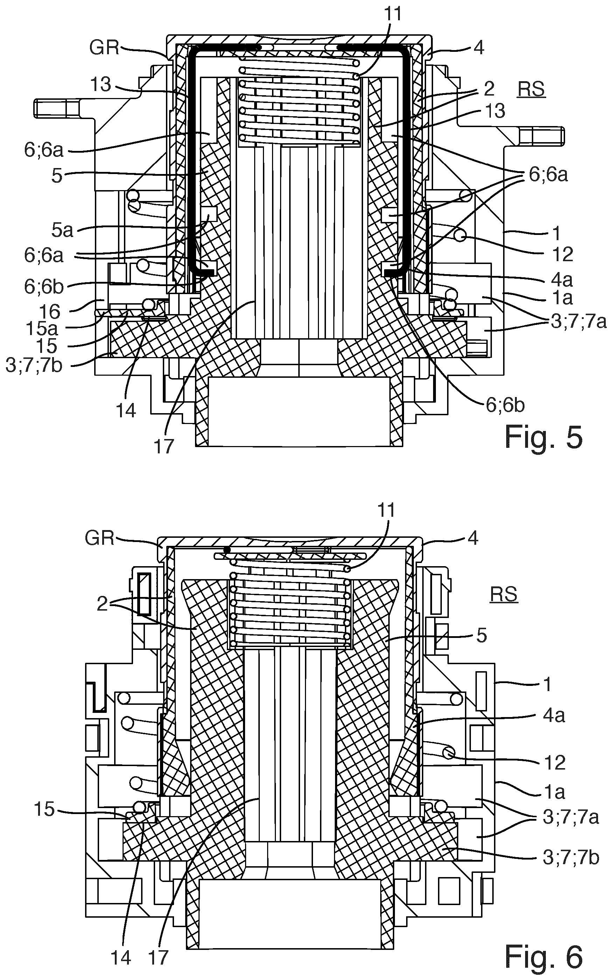

In vorteilhaften Ausführungsformen weist die Griffeinheit 2, wie im gezeigten Beispiel, einen Griffkörper 4 und einen Zwischenkörper 5 auf. Der Griffkörper 4 ist mit dem Zwischenkörper 5 drehgekoppelt, d. h. der Zwischenkörper 5 dreht sich bei Verdrehung des Griffkörpers 4 mit diesem mit. Zudem ist der Griffkörper 4 durch eine erste Kulissenführung 6, siehe insbesondere die Fig. 5, 7, 8 und 10, am Zwischenkörper 5 zwischen einer mit der Ruhestellung RS der Griffeinheit 2 korrespondierenden Griffruhestellung GR, siehe die Fig. 5 und 6, und einer mit der ersten und der zweiten Bedienstellung B1, B2 der Griffeinheit 2 korrespondierenden Griffbedienstellung GB, siehe die Fig. 7 und 8, axialbeweglich geführt.

Der Zwischenkörper 5 ist durch eine zweite Kulissenführung 7 am Basiskörper 1 in der ersten und der zweiten Bedienstellung B1, B2 drehbeweglich geführt und in der Freigabedrehstellung DF axialbeweglich zwischen der ersten Bedienstellung B1 und der zweiten Bedienstellung B2 geführt.

Die erste und die zweite Kulissenführung 6, 7 bilden somit für diese Konfiguration der Griffeinheit 2 mit Griffkörper 4 und Zwischenkörper 5 die Bestandteile der Bewegungsführung 3, um die von der Bewegungsführung 3 geforderten Führungsfunktionen für die Griffeinheit 2 zu erfüllen.

In entsprechenden Realisierungen weisen der Griffkörper 4 und der Zwischenkörper 5, wie im gezeigten Beispiel, teleskopartig ineinandergreifende Hülsenteile 4a, 5a auf, siehe insbesondere die Fig. 5 bis 8 und 10, wobei die erste Kulissenführung 6 eine Kulissennut 6a am Hülsenteil 5a des Zwischenkörpers 5 und einen in der Kulissennut 6a geführten Kulissennocken 6b am Hülsenteil 4a des Griffkörpers 4 umfasst. Dabei können je nach Bedarf mehrere Kulissennuten 6a und Kulissennocken 6b für die erste Kulissenführung 6 vorgesehen sein. Im gezeigten Beispiel umfasst die erste Kulissenführung 6 zwei in Umfangsrichtung um 180° gegeneinander versetzte Kulissennuten 6a und zugehörige Kulissennocken 6b.

Im gezeigten Beispiel beinhaltet die Kulissennut 6a, wie aus Fig. 10 ersichtlich, zwei voneinander beabstandete, parallel zueinander schräg in axialer Richtung und Umfangsrichtung verlaufende Bahnabschnitte 6a₁, 6a₂, die in axial einwärts weisender Richtung in einen Halteabschnitt 6a₃ einmünden bzw. aus diesem ausmünden. Der Halteabschnitt 6a₃ definiert einen stabilen Bahnpunkt für den in die Kulissennut 6a eingreifenden Kulissennocken 6b. Wenn sich der Kulissennocken 6b in diesem Halteabschnitt 6a₃ befindet, stellt dies die Ruhestellung RS der Griffeinheit 2 dar. Durch geringfügiges axiales Eindrücken des Griffkörpers 4 gegenüber dem Zwischenkörper 5 lässt sich der Kulissennocken 6b aus dem Halteabschnitt 6a₃ herausführen und gelangt in den Bahnabschnitt 6a₂, wodurch sich der Griffkörper 4 axial gegenüber dem Zwischenkörper 5 bewegen kann, um die Griffeinheit 2 von der Ruhestellung RS in die erste Bedienstellung B1 zu verbringen, wozu der Griffkörper 4 von seiner Griffruhestellung GR, die durch die Positionierung des Kulissennockens 6b am Halteabschnitt 6a₃ definiert ist, in seine Griffbedienstellung GB axial am Zwischenkörper 5 verlagert wird.

In entsprechenden Ausführungen weist der Basiskörper 1, wie im gezeigten Beispiel, einen den Zwischenkörper 5 umgebenden Hülsenabschnitt 1a auf. Die zweite Kulissenführung 7 umfasst eine Kulissennut 7a am Hülsenabschnitt 1a des Basiskörpers 1 und einen in dieser geführten, vom Zwischenkörper 5 radial abstehenden Kulissennocken 7b, siehe insbesondere die Fig. 5 bis 9. Es versteht sich, dass die zweite Kulissenführung 7 je nach Bedarf eine oder mehrere weitere Kulissennuten 7a und einen oder mehrere zugehörige weitere Kulissennocken 7b aufweisen kann. Im gezeigten Beispiel ist der Basiskörper 1 insgesamt hülsenförmig aus zwei Hülsenhalbschalen gebildet, wobei Fig. 9 eine Draufsicht auf die Innenseite einer der beiden Halbschalen zeigt.

Wie insbesondere in Fig. 9 zu erkennen, beinhaltet die jeweilige Kulissennut 7a zwei innenseitig am Hülsenabschnitt 1a des Basiskörpers 1 ausgebildete, jeweils in Umfangsrichtung verlaufende Nutabschnitte 7a₁, 7a₂, die axial voneinander beabstandet sind und sich jeweils über einen Umfangswinkel von etwas weniger als 360° erstrecken. In demjenigen Umfangswinkelbereich, in dem die Freigabedrehstellung DF liegt, besitzt die Kulissennut 7a zusätzlich einen Axialnutabschnitt 7a₃, der die beiden in Umfangsrichtung verlaufenden und axial voneinander beabstandeten Nutabschnitte 7a₁, 7a₂ miteinander verbindet. Dadurch stellt die Kulissennut 7a eine Kulissenbahn für den Kulissennocken 7b bereit, die den Nutabschnitt 7a₁ in Umfangsrichtung für die Drehung des Zwischenkörpers 5 und damit der Griffeinheit 2 relativ zum Basiskörper 1 in der ersten Bedienstellung B1, den Nutabschnitt 7a₂ axial versetzt zum Nutabschnitt 7a₁ ebenfalls in Umfangsrichtung für die Drehung des Zwischenkörpers 5 und damit der Griffeinheit 2 in der zweiten Bedienstellung B2 relativ zum Basiskörper 1 und den Axialnutabschnitt 7a₃ in axialer Richtung zwischen den beiden Nutabschnitten 7a₁, 7a₂ zur axialen Verlagerung des Zwischenkörpers 5 und damit der Griffeinheit 2 zwischen der ersten Bedienstellung B1 und der zweiten Bedienstellung B2 relativ zum Basiskörper 1 umfasst, wie in Fig. 9 durch einen zugehörigen Doppelpfeil DP symbolisiert, der den Bewegungsverlauf des Kulissennockens 7b symbolisiert.

In entsprechenden Ausführungen ist, wie im gezeigten Beispiel, der jeweilige Kulissennocken 6b der ersten Kulissenführung 6 von einem radial nach innen gebogenen Endbereich einer Drahtklammer 13 gebildet, die mit ihrem anderen Endbereich an einer Stirnfläche des topfförmig gebildeten Griffkörpers 4 festgehalten ist und sich mit einem Mittenbereich axial entlang der Innenseite des Griffkörpers 4 erstreckt, wie aus Fig. 5 zu erkennen.

In entsprechenden Realisierungen ist der Griffkörper 4, wie im gezeigten Beispiel, gegenüber dem Zwischenkörper 5 durch eine Griffkörper-Vorspannfeder 11 axial von seiner Griffruhestellung GR in Richtung seiner Griffbedienstellung GB vorgespannt, wie aus den Fig. 5 bis 8 ersichtlich. Im gezeigten Beispiel ist diese Vorspannfeder 11 in einer stirnseitigen Ausnehmung des Zwischenkörpers 5 aufgenommen und als Schraubendruckfeder ausgebildet, die sich einerseits am Zwischenkörper 5 und andererseits an der Stirnfläche des topfförmigen Griffkörpers 4 abstützt.

In entsprechenden Ausführungen ist der Zwischenkörper 5, wie im gezeigten Beispiel, gegenüber dem Basiskörper 1 durch eine Zwischenkörper-Vorspannfeder 12 axial von der zweiten Bedienstellung B2 in Richtung der ersten Bedienstellung B1 vorgespannt. Die Fig. 5 bis 7 zeigen die Vorspannfeder 12 in ihrem entspannteren Zustand, Fig. 8 zeigt die Vorspannfeder 12 in ihrem gespannteren Zustand, wenn der Benutzer den Zwischenkörper 5 gegen die Kraft der Vorspannfeder 12 von der ersten Bedienstellung B1 in die zweite Bedienstellung B2 bewegt. Im gezeigten Beispiel ist die Zwischenkörper-Vorspannfeder 12 von einer Schraubendruckfeder gebildet, die sich einerseits am Zwischenkörper 5 und andererseits am Basiskörper 1 abstützt.

In vorteilhaften Realisierungen erfolgt die Abstützung der Zwischenkörper-Vorspannfeder 12 am Zwischenkörper 5 über eine Gleitfläche 14, die durch ein scheibenringförmiges Gleitelement 15 bereitgestellt ist, siehe die Fig. 5 bis 8. Die Abstützung dieser Vorspannfeder 12 gegen den Zusatzkörper 5 über die Gleitfläche 14 hat zur Folge, dass sich der Zwischenkörper 5 drehen kann, ohne dass er dadurch eine übermäßige Drehbelastung bzw. Torsionsbelastung auf die Vorspannfeder 12 überträgt, da der Zwischenkörper 5 entlang der Gleitfläche 14 des Gleitelements 15 gleiten kann, während das Gleitelement 15 und das dieses kontaktierende Stirnende der Vorspannfeder 12 drehfest am Basiskörper 1 verbleiben. Dazu ist das Gleitelement 15 verdrehfest, jedoch axial beweglich am Basiskörper 1 gehalten bzw. geführt, z.B. wie gezeigt durch einen am Gleitelement 15 ausgebildeten radialen Führungsfortsatz 15a, der in eine zugehörige Axialnut 16 am Basiskörper 1 eingreift. Das Gleitelement 15 bleibt auf diese Weise verdrehsicher am Basiskörper 1 gehalten, wenn sich der Zwischenkörper 5 dreht und dabei an der Gleitfläche 14 des Gleitelements 15 entlanggleitet, Dies vermeidet folglich eine unerwünschte Torsionsbelastung der Zwischenkörper-Vorspannfeder 12, wenn die Griffeinheit 2 ihre Drehbewegung in der ersten oder der zweiten Bedienstellung B1, B2 ausführt, bei der sich entsprechend der Zwischenkörper 5 dreht. Andererseits kann das Gleitelement 15 der Axialbewegung des Zwischenkörpers 5 folgen, wenn dieser zwischen der ersten und zweiten Bedienstellung B1, B2 axial verlagert wird.

In entsprechenden Ausführungen beinhaltet der Zwischenkörper 5, wie in der gezeigten Ausführung, siehe die Fig. 5 bis 8, in seinem hohlen Inneren eine Mehrkantaufnahme 17, z.B. eine Sechskantaufnahme, in der drehfest ein Anschlussglied bzw. Koppelglied mit korrespondierendem Mehrkant-Querschnitt des über die Bediengriffvorrichtung zu betätigenden Thermostatventils aufnehmbar ist. Bei diesem Koppelglied kann es sich beispielsweise um einen entsprechenden Anschlussstummel einer Steuerungswelle des Thermostatventils handeln, wobei die Steuerungswelle mit diesem Anschlussstummel aus einer Ventilkartusche vorsteht, die ein Gehäuse für das Thermostatventil bildet. Derartige Thermostatventile sind dem Fachmann an sich bekannt und bedürfen daher hier keiner näheren Erläuterung.

Dementsprechend umfasst die Erfindung auch eine Thermostatventilanordnung, die ein Thermostatventil mit einem Ventilteil zur Temperaturregulierung eines vom Thermostatventil zu steuernden Fluidstroms und eine erfindungsgemäße Bediengriffvorrichtung zur Betätigung des Ventilteils umfasst.

Fig. 11 veranschaulicht eine vorteilhafte Ausführung der erfindungsgemäßen sanitären Wandeinbauvorrichtung nur mit ihren vorliegend interessierenden Komponenten. Wie daraus ersichtlich, umfasst die Wandeinbauvorrichtung ein wandeinbaubares Aufnahmegehäuse 8 mit einer vorderseitigen Gehäuseabdeckung 9 und eine im Aufnahmegehäuse 8 angeordnete, erfindungsgemäße Bediengriffvorrichtung zur Betätigung eines herkömmlichen und daher hier nicht weiter gezeigten Thermostatventils. Die Griffeinheit 2 der Bediengriffvorrichtung erstreckt sich durch eine Öffnung 10 der Gehäuseabdeckung 9 hindurch, wobei die axiale Bewegungsrichtung der Griffeinheit 2 senkrecht zur Ebene der Gehäuseabdeckung 9 ist.

Im gezeigten Beispiel beinhaltet die Gehäuseabdeckung 9 eine Mehrzahl von Öffnungen 10, von denen zwei durch jeweils eine erfindungsgemäße Bediengriffvorrichtung belegt sind. Eine in Fig. 11 untere erfindungsgemäße Bediengriffvorrichtung ist mit der Griffeinheit 2 in ihrer ersten Bedienstellung B1 gezeigt, in der die Griffeinheit 2 axial über die Gehäuseabdeckung 9 nach vorn vorsteht, so dass sie vom Benutzer bequem gegriffen werden kann, um eine ventilsteuernde Drehbewegung vorzunehmen. Eine darüberliegende, zweite erfindungsgemäße Bediengriffvorrichtung ist mit der Griffeinheit 2 in ihrer Ruhestellung RS gezeigt, d.h. der Griffkörper 4 befindet sich in seiner Griffruhestellung GR. Anstelle einer der beiden erfindungsgemäßen Bediengriffvorrichtungen kann in entsprechenden Ausführungen eine andere Ventilbedienvorrichtung vorgesehen sein, beispielsweise eine herkömmliche Bediengriffvorrichtung oder Bedientastenvorrichtung für ein Absperrventil oder ein Mengenregulierventil. Des Weiteren sind beim gezeigten Beispiel drei herkömmliche Bedientastenvorrichtungen 18 in zugehörigen Öffnungen 10 im Aufnahmegehäuse 8 außenbündig mit der Gehäuseabdeckung 9 aufgenommen.

In vorteilhaften Ausführungen ist die Griffeinheit 2, wie im gezeigten Beispiel, in der Ruhestellung RS im Wesentlichen fluchtend zur Gehäuseabdeckung 9 angeordnet, während sie in ihrer ersten und zweiten Bedienstellung B1, B2 von der Gehäuseabdeckung 9 axial vorsteht. In der Ruhestellung RS ist die Griffeinheit 2 daher in der Gehäuseabdeckung 9 versenkt angeordnet und für den Benutzer zur Ausführung einer Drehbewegung nicht zugänglich. Hingegen kann der Benutzer die Griffeinheit 2 in der ersten Bedienstellung B1 und in der zweiten Bedienstellung B2 jeweils problemlos greifen und drehen, wozu die Griffeinheit 2 in diesen Bedienstellungen B1, B2 ausreichend weit über die Gehäuseabdeckung 9 hinaus nach vorn vorsteht.

Um die Griffeinheit 2 von der Ruhestellung RS in die erste Bedienstellung B1 zu verbringen, drückt der Benutzer nach Art einer Drucktaste auf die Griffeinheit 2, genauer gesagt auf die Stirnfläche des topfförmigen Griffkörpers 4, und verlagert diese axial geringfügig in die Gehäuseabdeckung 9 hinein, wodurch der jeweilige Kulissennocken 6b aus dem Halteabschnitt 6a₃ der zugeordneten Kulissennut 6a herausgelangt, wonach die Griffeinheit 2 unter der Wirkung der Griffkörper-Vorspannfeder 11 selbsttätig axial in die erste Bedienstellung B1 herausfährt.

Wenn der Benutzer die Griffeinheit 2 in die zweite Bedienstellung B2 verbringen will, zieht er die Griffeinheit 2 axial entgegen der Zwischenkörper-Vorspannfeder 12 weiter nach vorn in Richtung aus der Gehäuseabdeckung 9 heraus. Dazu muss zuvor, wie erläutert, die Griffeinheit 2 in der Freigabedrehstellung DF gedreht worden sein. Anschließend kann der Benutzer die Griffeinheit 2 in der zweiten Bedienstellung B2 drehen, wobei ein Zurückschnappen in die erste Bedienstellung B1 blockiert ist, solange die Drehstellung der Griffeinheit 2 nicht der Freigabedrehstellung DF entspricht.

Erst wenn die Griffeinheit 2 in der zweiten Bedienstellung B2 wieder in die Freigabedrehstellung DF gedreht worden ist, kann sich die Griffeinheit 2 selbsttätig unter der Wirkung der Zwischenkörper-Vorspannfeder 12 axial in die erste Bedienstellung B1 zurückbewegen.

Wenn der Benutzer die Griffeinheit 2 von der ersten Bedienstellung B1 in die Ruhestellung RS verbringen will, drückt er axial auf die Griffeinheit 2 bzw. den Griffkörper 4 entgegen der Vorspannkraft der Griffkörper-Vorspannfeder 11, bis die Griffeinheit 2 die Ruhestellung RS erreicht hat und dort durch die entsprechende Ausbildung der ersten Kulissenführung 6 gehalten wird, wie oben erläutert, indem der jeweilige Kulissennocken 6b in den zugehörigen Halteabschnitt 6a₃ gelangt.

In entsprechenden Ausführungen weist das Aufnahmegehäuse 8, wie im gezeigten Beispiel, eine Nische 19 auf, die von der Gehäuseabdeckung 9 freigelassen wird und z.B. zur Ablage von Gegenständen genutzt werden kann. Die Nische 19 kann rückseitig geschlossen sein, wie gezeigt, oder alternativ rückseitig ganz oder bereichsweise offen sein.

In entsprechenden Ausführungen umfasst die sanitäre Wandeinbauvorrichtung, wie im gezeigten Beispiel, eine Handbrause mit einem Handbrausekörper 20, der herausnehmbar in einer zugeordneten weiteren Öffnung 10 der Gehäuseabdeckung 9 im Aufnahmegehäuse 8 aufgenommen ist, wobei der Handbrausekörper 20 in der gezeigten Ruhe- bzw. Ablagestellung außenbündig mit der angrenzenden Oberfläche der Gehäuseabdeckung 9 abschließt. Somit sind der Handbrausekörper 20, die jeweilige erfindungsgemäße Bediengriffvorrichtung 2 und die optionalen herkömmlichen Bedienvorrichtungen 18 derart im Aufnahmegehäuse 8 aufgenommen, dass sie außenbündig, d.h. fluchtend, mit dem umgebenden Bereich der Gehäuseabdeckung 9 abschließen, die in diesem Fall als eine Art Abdeckrosette fungiert.

Wie die gezeigten und die weiteren oben erläuterten Ausführungsbeispiele deutlich machen, stellt die Erfindung in vorteilhafter Weise eine Bediengriffvorrichtung für ein Thermostatventil zur Verfügung, die insbesondere Vorteile im Hinblick auf Funktionalität und Designaspekte sowie geringen Herstellungsaufwand bietet. Des Weiteren stellt die Erfindung eine sanitäre Wandeinbauvorrichtung zur Verfügung, die mit einer oder mehreren erfindungsgemäßen Bediengriffvorrichtungen ausgerüstet ist. Wenngleich die Erfindung vorliegend primär im Zusammenhang mit sanitären Thermostatventilen erläutert wurde, versteht es sich, dass die erfindungsgemäße Bediengriffvorrichtung in gleicher Weise für Thermostatventile in nicht-sanitären Anwendungen verwendbar ist.

## Patentansprüche

1. Bediengriffvorrichtung für ein Thermostatventil, mit
- einem Basiskörper (1) und
- einer Griffeinheit (2), die am Basiskörper (1) gehalten und gegenüber diesem zwischen einer Ruhestellung (RS) und einer ersten Bedienstellung (B1) axial verschiebbar und in der ersten Bedienstellung (B1) drehbeweglich ist,
**gekennzeichnet durch**
- eine zweite Bedienstellung (B2), in welche die Griffeinheit (2) ausgehend von der ersten Bedienstellung (B1) axial verschiebbar ist und in welcher die Griffeinheit (2) drehbeweglich ist, und
- eine Bewegungsführung (3), welche das axiale Verschieben der Griffeinheit (2) von der ersten Bedienstellung (B1) in die zweite Bedienstellung (B2) nur freigibt, wenn sich die Griffeinheit (2) in einer vorgegebenen Freigabedrehstellung (DF) befindet, und welche die Griffeinheit (2) gegen Verdrehen sperrt, wenn sich diese axial zwischen der ersten Bedienstellung (B1) und der zweiten Bedienstellung (B2) befindet.

2. Bediengriffvorrichtung nach Anspruch 1, weiter **dadurch gekennzeichnet, dass** die Griffeinheit (2) in der ersten Bedienstellung (B1) zwischen einer ersten und einer zweiten Drehendstellung (D1, D2) begrenzt drehbeweglich ist und die zweite Drehendstellung (D2) die Freigabedrehstellung (DF) ist.

3. Bediengriffvorrichtung nach Anspruch 2, weiter **dadurch gekennzeichnet, dass** die Griffeinheit (2) in der zweiten Bedienstellung (B2) von der Freigabedrehstellung (DF) aus in Richtung eines Drehsinns von der ersten zur zweiten Drehendstellung (D1, D2) der ersten Bedienstellung (B1) weiterdrehbar ist.

4. Bediengriffvorrichtung nach einem der Ansprüche 1 bis 3, weiter **dadurch gekennzeichnet, dass** sich die erste Bedienstellung (B1) axial zwischen der Ruhestellung (RS) und der zweiten Bedienstellung (B2) befindet.

5. Bediengriffvorrichtung nach einem der Ansprüche 1 bis 4, weiter **dadurch gekennzeichnet, dass** die Griffeinheit (2) einen Griffkörper (4) und einen Zwischenkörper (5) aufweist, wobei der Griffkörper (4) mit dem Zwischenkörper (5) drehgekoppelt ist und durch eine erste Kulissenführung (6) am Zwischenkörper (5) zwischen einer mit der Ruhestellung (RS) der Griffeinheit (2) korrespondierenden Griffruhestellung (GR) und einer mit der ersten und der zweiten Bedienstellung (B1, B2) der Griffeinheit (2) korrespondierenden Griffbedienstellung (GB) axialbeweglich geführt ist und wobei der Zwischenkörper (5) durch eine zweite Kulissenführung (7) am Basiskörper (1) in der ersten und der zweiten Bedienstellung (B1, B2) drehbeweglich geführt ist und in der Freigabedrehstellung (DF) axialbeweglich zwischen der ersten Bedienstellung (B1) und der zweiten Bedienstellung (B2) geführt ist.

6. Bediengriffvorrichtung nach Anspruch 5, weiter **dadurch gekennzeichnet, dass** der Griffkörper (4) und der Zwischenkörper (5) teleskopartig ineinandergreifende Hülsenteile (4a, 5a) aufweisen und die erste Kulissenführung (6) eine Kulissennut (6a) am Hülsenteil (5a) des Zwischenkörpers (5) und einen in der Kulissennut (6a) geführten Kulissennocken (6b) am Hülsenteil (4a) des Griffkörpers (4) umfasst.

7. Bediengriffvorrichtung nach Anspruch 5 oder 6, weiter **dadurch gekennzeichnet, dass** der Basiskörper (1) einen den Zwischenkörper (5) umgebenden Hülsenabschnitt (1a) aufweist und die zweite Kulissenführung (7) eine Kulissennut (7a) am Hülsenabschnitt (1a) des Basiskörpers (1) und einen in dieser geführten, vom Zwischenkörper (5) radial abstehenden Kulissennocken (7b) umfasst.

8. Bediengriffvorrichtung nach einem der Ansprüche 1 bis 7, weiter **dadurch gekennzeichnet, dass** der Griffkörper (4) gegenüber dem Zwischenkörper (5) durch eine Griffkörper-Vorspannfeder (11) axial von seiner Griffruhestellung (GR) in Richtung seiner Griffbedienstellung (GB) vorgespannt ist und/oder der Zwischenkörper (5) gegenüber dem Basiskörper (1) durch eine Zwischenkörper-Vorspannfeder (12) axial von der zweiten Bedienstellung (B2) in Richtung der ersten Bedienstellung (B1) vorgespannt ist.

9. Sanitäre Wandeinbauvorrichtung mit
- einem wandeinbaubaren Aufnahmegehäuse (8) mit einer vorderseitigen Gehäuseabdeckung (9) und
- einer im Aufnahmegehäuse (8) angeordneten Bediengriffvorrichtung nach einem der Ansprüche 1 bis 8 zur Betätigung einer Einstelleinheit eines Thermostatventils,
- wobei sich die Griffeinheit (2) durch eine Öffnung (10) der Gehäuseabdeckung (9) hindurch erstreckt und die axiale Bewegungsrichtung der Griffeinheit (2) senkrecht zur Ebene der Gehäuseabdeckung (9) ist.

10. Sanitäre Wandeinbauvorrichtung nach Anspruch 10, wobei die Griffeinheit (2) in der Ruhestellung (RS) im Wesentlichen fluchtend zur Gehäuseabdeckung (9) angeordnet ist und in ihrer ersten und zweiten Bedienstellung (B1, B2) von der Gehäuseabdeckung (9) vorsteht.

## Claims

1. Operating handle device for a thermostatic valve, comprising
- a base body (1) and
- a handle unit (2) which is held at the base body (1) and is axially movable relative thereto between a rest position (RS) and a first operating position (B1) and is rotatable in the first operating position (B1),
**characterized by**
- a second operating position (B2) to which the handle unit (2) can be axially shifted starting from the first operating position (B1) and in which the handle unit (2) is rotatable, and
- a motion guide (3) which releases the axial shifting of the handle unit (2) from the first operating position (B1) to the second operating position (B2) only when the handle unit (2) is located in a pre-defined rotary release position (DF) and which blocks the handle unit (2) from being rotated when the handle unit (2) is located axially between the first operating position (B1) and the second operating position (B2).

2. Operating handle device according to claim 1, further **characterized in that** in the first operating position (B1) the handle unit (2) is rotatable to a limited extent only between a first and a second rotary end position (D1, D2), and that the second rotary end position (D2) is the rotary release position (DF).

3. Operating handle device according to claim 2, further **characterized in that** in the second operating position (B2), starting from the rotary release position (DF), the handle unit (2) can be rotated further in a direction of rotation from the first to the second rotary end position (D1, D2) of the first operating position (B1) .

4. Operating handle device according to one of claims 1 to 3, further **characterized in that** the first operating position (B1) is located axially between the rest position (RS) and the second operating position (B2).

5. Operating handle device according to one of claims 1 to 4, further **characterized in that** the handle unit (2) comprises a handle body (4) and an intermediate body (5), wherein the handle body (4) is rotationally coupled to the intermediate body (5) and is guided by a first slotted guide (6) on the intermediate body (5) axially movably between a handle rest position (GR) corresponding to the rest position (RS) of the handle unit (2) and a handle operating position (GB) corresponding to the first and the second operating position (B1, B2) of the handle unit (2), and wherein in the first and the second operating position (B1, B2) the intermediate body (5) is rotationally guided by a second slotted guide (7) on the base body (1) and in the rotary release position (DF) is guided axially movably between the first operating position (B1) and the second operating position (B2).

6. Operating handle device according to claim 5, further **characterized in that** the handle body (4) and the intermediate body (5) comprise sleeve parts (4a, 5a) that extend telescopically into one another and the first slotted guide (6) comprises a slot notch (6a) on the sleeve part (5a) of the intermediate body (5) and a slot cam (6b) on the sleeve part (4a) of the handle body (4), the cam (6b) being guided in the slot notch (6a).

7. Operating handle device according to claim 5 or 6, **characterized in that** the base body (1) comprises a sleeve section (1a) surrounding the intermediate body (5) and the second slotted guide (7) comprises a slot notch (7a) on the sleeve section (1a) of the base body (1) and a slot cam (7b) that protrudes out radially from the intermediate body (5) and is guided in said notch (7a).

8. Operating handle device according to one of claims 1 to 7, further **characterized in that** the handle body (4) is axially pre-tensioned relative to the intermediate body (5) away from its handle rest position (GR) in the direction of its handle operating position (GB) by a handle body pre-tensioning spring (11) and/or the intermediate body (5) is axially pre-tensioned relative to the base body (1) away from the second operating position (B2) in the direction of the first operating position (B1) by an intermediate body pre-tensioning spring (12).

9. Sanitary wall installation device, comprising
- a wall-mountable receiving housing (8) having a front-side housing cover (9) and
- an operating handle device according to one of claims 1 to 8 arranged in the receiving housing (8), the operating handle device being provided for actuating an adjusting unit of a thermostatic valve,
- wherein the handle unit (2) extends through an opening (10) of the housing cover (9) and the axial direction of movement of the handle unit (2) is perpendicular to the plane of the housing cover (9).

10. Sanitary wall installation device according to claim 9, wherein in the rest position (RS) the handle unit (2) is arranged substantially flush with respect to the housing cover (9) and in its first and second operating position (B1, B2) the handle unit (2) protrudes out from the housing cover (9).

## Revendications

1. Dispositif de poignée de commande pour une vanne thermostatique, comprenant
- un corps de base (1) et
- une unité de poignée (2) qui est maintenue sur le corps de base (1) et qui est mobile en translation axiale par rapport à celui-ci entre une position de repos (RS) et une première position de commande (B1) et qui, dans la première position de commande (B1), est mobile en rotation,
**caractérisé par**
- une deuxième position de commande (B2) vers laquelle l'unité de poignée (2) est mobile en translation axiale à partir de la première position de commande (B1) et dans laquelle l'unité de poignée (2) est mobile en rotation, et
- un guidage de mouvement (3) qui n'autorise la translation axiale de l'unité de poignée (2) de la première position de commande (B1) vers la deuxième position de commande (B2) que lorsque l'unité de poignée (2) se trouve dans une position de rotation de libération (DF) prédéfinie, et qui bloque l'unité de poignée (2) contre toute rotation lorsque celle-ci se trouve axialement entre la première position de commande (B1) et la deuxième position de commande (B2).

2. Dispositif de poignée de commande selon la revendication 1,
**caractérisé en outre en ce que**, dans la première position de commande (B1), l'unité de poignée (2) est mobile en rotation de manière limitée entre une première et une deuxième position de fin de course de rotation (D1, D2), et **en ce que** la deuxième position de fin de course de rotation (D2) est la position de rotation de libération (DF).

3. Dispositif de poignée de commande selon la revendication 2,
**caractérisé en outre en ce que**, dans la deuxième position de commande (B2), l'unité de poignée (2) peut continuer à tourner à partir de la position de rotation de libération (DF) dans le sens de rotation allant de la première à la deuxième position de fin de course de rotation (D1, D2) de la première position de commande (B1).

4. Dispositif de poignée de commande selon l'une des revendications 1 à 3,
**caractérisé en outre en ce que** la première position de commande (B1) se situe axialement entre la position de repos (RS) et la deuxième position de commande (B2).

5. Dispositif de poignée de commande selon l'une des revendications 1 à 4,
**caractérisé en outre en ce que** l'unité de poignée (2) comporte un corps de poignée (4) et un corps intermédiaire (5), le corps de poignée (4) étant couplé en rotation au corps intermédiaire (5) et étant guidé de manière axialement mobile par un premier guidage à coulisse (6), situé sur le corps intermédiaire (5), entre une position de repos de poignée (GR) correspondant à la position de repos (RS) de l'unité de poignée (2) et une position de commande de poignée (GB) correspondant aux première et deuxième positions de commande (B1, B2) de l'unité de poignée (2), et le corps intermédiaire (5) étant guidé de manière rotative par un deuxième guidage à coulisse (7), situé sur le corps de base (1), dans les première et deuxième positions de commande (B1, B2), et étant guidé de manière axialement mobile entre la première position de commande (B1) et la deuxième position de commande (B2), dans la position de rotation de libération (DF).

6. Dispositif de poignée de commande selon la revendication 5,
**caractérisé en outre en ce que** le corps de poignée (4) et le corps intermédiaire (5) comportent des parties formant manchon (4a, 5a) s'emboîtant de manière télescopique, et **en ce que** le premier guidage à coulisse (6) comprend une rainure de coulisse (6a), située sur la partie formant manchon (5a) du corps intermédiaire (5), et une came de coulisse (6b) située sur la partie formant manchon (4a) du corps de poignée (4) et guidée dans la rainure de coulisse (6a).

7. Dispositif de poignée de commande selon la revendication 5 ou 6,
**caractérisé en outre en ce que** le corps de base (1) présente une portion formant manchon (1a) entourant le corps intermédiaire (5), et **en ce que** le deuxième guidage à coulisse (7) comprend une rainure de coulisse (7a), située sur la portion formant manchon (1a) du corps de base (1), et une came de coulisse (7b) guidée dans celle-ci et s'étendant radialement à partir du corps intermédiaire (5).

8. Dispositif de poignée de commande selon l'une des revendications 1 à 7,
**caractérisé en outre en ce que** le corps de poignée (4) est précontraint par rapport au corps intermédiaire (5) par un ressort de précontrainte de corps de poignée (11) axialement depuis sa position de repos de poignée (GR) vers sa position de commande de poignée (GB), et/ou **en ce que** le corps intermédiaire (5) est précontraint par rapport au corps de base (1) par un ressort de précontrainte de corps intermédiaire (12) axialement depuis la deuxième position de commande (B2) vers la première position de commande (B1).

9. Dispositif sanitaire à encastrer dans un mur, comprenant
- un boîtier de logement (8) pouvant être encastré dans un mur et muni d'un cache de boîtier (9) à l'avant, et
- un dispositif de poignée de commande selon l'une des revendications 1 à 8, disposé dans le boîtier de logement (8) et destiné à actionner une unité de réglage d'une vanne thermostatique,
- l'unité de poignée (2) s'étendant à travers une ouverture (10) du cache de boîtier (9), et la direction de déplacement axial de l'unité de poignée (2) étant perpendiculaire au plan du cache de boîtier (9).

10. Dispositif sanitaire à encastrer dans un mur selon la revendication 10, dans lequel l'unité de poignée (2) est disposée sensiblement dans l'alignement du cache de boîtier (9), dans la position de repos (RS), et fait saillie du cache de boîtier (9), dans ses première et deuxième positions de commande (B1, B2).
